# EUROPÄISCHE PATENTSCHRIFT

(11) **EP 3 928 605 B1**
(45) Veröffentlichungstag und Bekanntmachung des Hinweises auf die Patenterteilung: **20.11.2024**
(21) Anmeldenummer: 21179990.3
(22) Anmeldetag: 17.06.2021
(51) Int. Cl.: A01B 73/02, A01D 41/14, A01D 43/08, A01D 75/20

(54) **VORSATZGERÄT MIT EINER SICHERHEITSEINRICHTUNG, LANDWIRTSCHAFTLICHE ARBEITSMASCHINE MIT DEM VORSATZGERÄT UND VERFAHREN ZUM ÜBERFÜHREN DES VORSATZGERÄTES VON EINER ERNTEBETRIEBSANORDNUNG IN EINE STRASSENTRANSPORTANORDNUNG**
ATTACHMENT WITH A SAFETY DEVICE, AGRICULTURAL WORKING MACHINE WITH THE ATTACHMENT AND METHOD FOR TRANSFERRING THE ATTACHMENT FROM A HARVESTER OPERATING ARRANGEMENT TO A ROAD TRANSPORT ARRANGEMENT
APPAREIL ADAPTABLE DOTÉ D'UN DISPOSITIF DE SÉCURITÉ, MACHINE AGRICOLE DOTÉE DE L'APPAREIL ADAPTABLE ET PROCÉDÉ DE TRANSFERT DE L'APPAREIL ADAPTABLE D'UN AGENCEMENT DE RÉCOLTE À UN AGENCEMENT DE TRANSPORT ROUTIER

(30) Priorität: 24.06.2020 DE 102020116639
(43) Veröffentlichungstag der Anmeldung: 29.12.2021
(73) Patentinhaber: Maschinenfabrik Bernard Krone GmbH & Co. KG, 48480 Spelle (DE)
(72) Erfinder: Ahlmer, Frank, 49492 Westerkappeln (DE); Ester, Markus, 49832 Beesten (DE); Bolsmann, Martin, 49832 Andervenne (DE); Stentenbach, Hendrik, 48465 Isterberg (DE)

(56) Entgegenhaltungen:
- BE-B1- 1 023 463
- DE-A1- 102013 001 651
- DE-A1- 102014 209 203
- US-A1- 2006 254 240
- US-A1- 2009 325 659
- US-A1- 2011 154 793
- US-A1- 2016 066 508

## Beschreibung

Die vorliegende Erfindung betrifft ein Vorsatzgerät zum Ernten von stängeligem Erntegut, mit mindestens einem Schneid-, Führungs- und/oder Förderelement zum Schneiden, Führen und/oder Fördern des Erntegutes, die an einer in einer Fahrtrichtung vorn angeordneten Stirnseite einen Korpus des Vorsatzgerätes überragt. Die vorliegende Erfindung betrifft weiterhin eine landwirtschaftliche Arbeitsmaschine mit einem solchen Vorsatzgerät. Die vorliegende Erfindung betrifft weiterhin ein Verfahren zum Überführen eines solchen Vorsatzgerätes von einer Erntebetriebsanordnung in eine Straßentransportanordnung oder zurück.

Für den Straßentransport müssen an Vorsatzgeräten für landwirtschaftliche Arbeitsmaschinen Schutzeinrichtungen vorgesehen werden, die zum Schutz anderer Verkehrsteilnehmer vor Verletzungen durch Berührkontakt mit Bauteilen der Vorsatzgeräte, wie beispielsweise Schneid-, Führungs- und/oder Förderelementen, vorgesehen sind. Die Schutzeinrichtungen müssen gewährleisten, dass sich die weiteren Verkehrsteilnehmer, beispielsweise Fahrradfahrer oder Fußgänger, am Vorsatzgerät abstützen können, ohne Schneid-, Führungs- und/oder Förderelemente des Vorsatzgerätes anfassen zu müssen.

Solche Schutzeinrichtungen werden für den Feldeinsatz herkömmlich demontiert und abgelegt, bevor das Vorsatzgerät auf dem Feld in Betrieb genommen wird. Nach Abschluss des Feldeinsatzes müssen die Schutzeinrichtungen zum Vorsatzgerät oder das Vorsatzgerät zum Ablageort der Schutzvorrichtungen verbracht werden, um sie am Vorsatzgerät zu befestigen, bevor dieses auf der Straße transportiert wird. Sowohl das Montieren als auch das Demontieren ist jedoch zeitaufwändig. Zudem können während eines Einsatztages auf dem Feld Feldwechsel stattfinden, durch die das Transportieren der Schutzeinrichtungen zum Vorsatzgerät oder des Vorsatzgerätes zum Ablageort der Schutzeinrichtungen nach Abschluss des Feldeinsatzes zeitaufwändig sein kann.

Bekannt sind auch Schutzeinrichtungen, die an einem externen Fahrwerk, welches zum Transport des Vorsatzgerätes vorgesehen ist, angeordnet sind. Jedoch muss das Vorsatzgerät auch bei Nutzung eines solchen externen Fahrwerks nach Abschluss des Feldeinsatzes wieder zum Fahrwerk oder das Fahrwerk zum Vorsatzgerät gebracht werden, was, insbesondere nach einem Feldwechsel, zeitaufwändig ist.

Die Druckschrift DE 10 2013 001 651 A1 offenbart eine Schutzvorrichtung eines Mäh- und Einzugswerks einer Erntemaschine, die mehrere Segmente aufweist, die derart gelenkig miteinander verbunden sind, dass die Segmente in einer Erntestellung des Mäh- und Einzugswerks dasselbe vorne und seitlich freigeben, wohingegen die Segmente in einer Transportstellung des Mäh- und Einzugswerks dasselbe vorne und seitlich begrenzen bzw. abdecken.

Aufgabe der Erfindung ist es, ein Vorsatzgerät für eine landwirtschaftliche Arbeitsmaschine zu schaffen, bei dem der Zeitaufwand für das Montieren, Demontieren und/oder Transportieren einer solchen Schutzeinrichtung möglichst gering ist.

Die Aufgabe wird gelöst mit einem Vorsatzgerät mit den Merkmalen des unabhängigen Patentanspruchs 1, einer landwirtschaftlichen Arbeitsmaschine mit den Merkmalen des unabhängigen Patentanspruchs 11, und einem Verfahren zum Überführen eines solchen Vorsatzgerätes von einer Erntebetriebsanordnung in eine Straßentransportanordnung mit den Merkmalen des unabhängigen Anspruchs 12. Vorteilhafte Ausführungsformen sind den abhängigen Ansprüchen entnehmbar.

Dafür wird ein Vorsatzgerät geschaffen. Das Vorsatzgerät ist zum Ernten von stängeligem Erntegut wie beispielsweise von Mais oder Energiegetreide vorgesehen. Es weist mindestens ein Schneid-, Führungs- und/oder Förderelement zum Schneiden, Führen und/oder Fördern des Erntegutes auf. Das Schneid-, Führungs- und/oder Förderelement ist an einer in einer Fahrtrichtung vorn angeordneten Stirnseite des Vorsatzgerätes angeordnet. Es überragt einen Korpus des Vorsatzgerätes, der beispielsweise durch einen Rahmen und/oder ein Gehäuse des Vorsatzgerätes gebildet ist, an der Stirnseite.

Am Vorsatzgerät ist eine Sicherheitseinrichtung angeordnet, die zum Schutz von Verkehrsteilnehmern beim Straßentransport des Vorsatzgerätes dient. Die Sicherheitseinrichtung ist von einer Feldbetriebsstellung in eine Sicherheitsstellung, in der sie dem Schneid-, Führungs- und/oder Förderelement in Fahrtrichtung vorgelagert ist, verstellbar.

Da die Sicherheitseinrichtung in der Sicherheitsstellung dem Schneid-, Führungs- und/oder Förderelement in Fahrtrichtung vorgelagert ist, ermöglicht sie Verkehrsteilnehmern, sich an ihr abzustützen, ohne das Schneid-, Führungs- und/oder Förderelement anfassen zu müssen. Dadurch ist die Gefahr für Verkehrsteilnehmer, sich am Vorsatzgerät, insbesondere am Schneid-, Führungs- und/oder Förderelement, zu verletzen, erheblich verringert.

Um einen Einzug des Erntegutes nicht zu behindern, ist die Sicherheitseinrichtung in der Feldbetriebsstellung dem Schneid-, Führungs- und/oder Förderelement in Fahrtrichtung nicht vorgelagert. Bevorzugt ist sie in der Feldbetriebsstellung in einer Erstreckungsrichtung, die sich quer zur Fahrtrichtung und quer zur Querrichtung erstreckt, oberhalb des und/oder in Fahrtrichtung hinter dem Schneid-, Führungs- und/oder Förderelement angeordnet. Besonders bevorzugt ist sie in der Feldbetriebsstellung oberhalb des und/oder hinter dem Korpus angeordnet.

Da die Sicherheitseinrichtung zudem am Vorsatzgerät befestigt ist, muss sie weder vor dem Feldeinsatz montiert noch nach Abschluss des Feldeinsatzes demontiert werden. Zudem ist sie unmittelbar verfügbar und muss vor der Montage nicht erst von einem Ablageort zum Vorsatzgerät transportiert werden. Die Handhabung der Sicherheitseinrichtung ist schon deshalb erheblich weniger aufwändig, insbesondere weniger zeitaufwändig.

Um die Sicherheitseinrichtung für den Bediener möglichst einfach und schnell von der Sicherheitsstellung in eine Feldbetriebsstellung und/oder zurück verstellen zu können, ist es zudem bevorzugt, dass sie reversibel von der Sicherheitsstellung in die Feldbetriebsstellung verschiebbar und/oder verschwenkbar ist. Dafür kann eine Handhabung, beispielsweise ein Hebel oder Schalter, am Vorsatzgerät oder an einer landwirtschaftlichen Arbeitsmaschine, an der das Vorsatzgerät angeordnet ist, vorgesehen sein, mit der das Verstellen auslösbar ist. Besonders bevorzugt erfolgt das Verschieben und/oder Verschwenken der Sicherheitseinrichtung automatisiert. In einer besonders bevorzugten Ausführungsform ist das Verschieben und/oder Verschwenken der Sicherheitseinrichtung mit einer Inbetriebnahme oder Außerbetriebnahme des Vorsatzgerätes gekoppelt, so dass es beim Überführen des Vorsatzgerätes von einer Erntebetriebsanordnung in eine Straßentransportanordnung, durch die das Vorsatzgerät außer Betrieb genommen wird, und/oder beim Überführen des Vorsatzgerätes von einer Straßentransportanordnung in eine Erntebetriebsanordnung, durch die das Vorsatzgerät in Betrieb genommen wird, ausgelöst wird.

Ein solches Vorsatzgerät ist beispielsweise ein reihenabhängiges oder reihenunabhängiges Maiserntevorsatzgerät zum Pflücken und/oder Häckseln von Mais. Es sind aber auch Vorsatzgeräte zum Ernten von anderem stängeligem Erntegut wie beispielsweise von (Ruten-) Hirse, Miscanthus, Getreidestroh, Energiegetreide oder Sonnenblumenkernen bevorzugt.

Ein Schneid-, Führungs- und/oder Förderelement eines solchen Vorsatzgerätes ist beispielsweise eine Schneide oder ein Messer, ein Halm- oder Reihenteiler, ein Einweisbügel, ein Ährenheber oder ein Mitnehmer zum Fördern von Erntegut. Bei einem solchen Vorsatzgerät ist in der Regel nicht nur ein einzelnes solches Schneid-, Führungs- und/oder Förderelement, sondern sind eine Vielzahl solcher Schneid-, Führungs- und/oder Förderelemente, oftmals gruppenweise, stirnseitig am Korpus angeordnet, um das Erntegut zu erfassen, zu schneiden und/oder zu einem Auslass, durch den das Erntegut einer Weiterverarbeitung zugeführt wird, zu fördern.

Das Vorsatzgerät zeichnet sich dadurch aus, dass die Sicherheitseinrichtung einen Querarm umfasst, der eine Erstreckungskomponente in eine Querrichtung quer zur Fahrtrichtung aufweist, oder der sich in Querrichtung erstreckt.

Vorzugsweise ist der Querarm in der Sicherheitsstellung nicht nur einem einzelnen Schneid-, Führungs- und/oder Förderelement, sondern mehreren Schneid-, Führungs- und/oder Förderelementen vorgelagert angeordnet. In dieser Ausführungsform kann der Querarm der Sicherheitseinrichtung von den Verkehrsteilnehmern zum Abstützen genutzt werden. Dadurch reicht ein einziger Querarm zum Schutz der Verkehrsteilnehmer vor einer Vielzahl von Schneid-, Führungs- und/oder Förderelementen aus. Ein solcher Querarm ist nicht nur größer als eine Sicherheitseinrichtung für ein einzelnes Schneid-, Führungs- und/oder Förderelement und dadurch für den Verkehrsteilnehmer leichter erkennbar. Aufgrund seiner Ausmaße kann sich der Verkehrsteilnehmer auch besser am Querarm abstützen. Die Erkennbarkeit des Querarms kann noch weiter verbessert werden, indem dieser farblich hervorstechend gestaltet ist und/oder, insbesondere nachts, beleuchtet ist. Auch überdeckt ein solcher Querarm Zwischenräume zwischen den Schneid-, Führungs- und/oder Förderelementen, so dass die Gefahr, dass ein Verkehrsteilnehmer, insbesondere mit seinen Händen oder Armen, zwischen diese Elemente gerät, weiter verringert ist.

Zudem zeichnet sich das Vorsatzgerät dadurch aus, dass der Querarm in der Feldbetriebsstellung in Fahrtrichtung hinter und/oder in Erstreckungsrichtung oberhalb des Korpus angeordnet ist. Dadurch behindert er den Ernteguteinzug nicht.

In einer bevorzugten Ausführungsform weist die Sicherheitseinrichtung weiterhin wenigstens einen Tragarm auf, an dem der Querarm befestigt ist. Dabei ist es besonders bevorzugt, dass sie zwei, insbesondere im Wesentlichen baugleiche,

Tragarme umfasst, die voneinander beabstandet am Vorsatzgerät befestigt sind, und zwischen denen sich der Querarm erstreckt. Ganz besonders bevorzugt ist die Sicherheitseinrichtung im Wesentlichen u-förmig ausgebildet. Dabei können die Tragarme gebogen sein, um in der Sicherheitsstellung die Positionierung des Querarms vor den Schneid-, Führungs- und/oder Förderelementen zu gewährleisten.

Dabei ist es bevorzugt, dass die Sicherheitseinrichtung durch Verschieben, Verlängern und/oder Verschwenken des Tragarms reversibel von der Sicherheitsstellung in die Feldbetriebsstellung überführbar ist. Der Tragarm kann dafür in einer ersten bevorzugten Ausführungsform verschieb- und/oder verschwenkbar am Korpus des Vorsatzgerätes gehaltert sein.

In einer zweiten bevorzugten Ausführungsform weist das Vorsatzgerät ein Geländer auf, an dem die Sicherheitseinrichtung befestigt ist. Das Geländer ist bevorzugt von einer, insbesondere für den Erntebetrieb vorgesehenen, Nutzungsstellung, in der ein Führungsbügel für Pflanzen des Geländers oberhalb des Gehäuses und von diesem beabstandet angeordnet ist, in eine, insbesondere für den Straßentransport vorgesehene, Ruhestellung überführbar, in der der Führungsbügel gegenüber der Nutzungsstellung in Erstreckungsrichtung abgesenkt ist.

Sowohl bei der am Korpus gehalterten Sicherheitseinrichtung als auch bei der am Geländer gehalterten Sicherheitseinrichtung ist es weiterhin bevorzugt, dass die Sicherheitseinrichtung beim Verstellen des Geländers von der Nutzungsstellung in die Ruhestellung automatisch von der Feldbetriebsstellung in die Sicherheitsstellung, sowie beim Zurückstellen automatisch zurück, verstellbar ist.

Damit das Verstellen der Sicherheitseinrichtung in die Sicherheitsstellung nicht vom Bediener vergessen werden kann, und um weiterhin eine Beschädigung der Sicherheitseinrichtung beim Überführen des Vorsatzgerätes von der Erntebetriebsanordnung in die Straßentransportanordnung zu vermeiden, ist es besonders bevorzugt, dass das Verstellen der Sicherheitseinrichtung von der Feldbetriebsstellung in die Sicherheitsstellung automatisch ausgelöst wird, wenn das Überführen des Vorsatzgerätes von der Erntebetriebsanordnung in die Straßentransportanordnung ausgelöst wird. Ganz besonders bevorzugt erfolgt es dann vor dem Überführen des Vorsatzgerätes von der Erntebetriebsanordnung in die Straßentransportanordnung.

Bei einer am Geländer angeordneter Sicherheitseinrichtung erfolgt das Verstellen der Sicherheitseinrichtung bevorzugt gemeinsam mit dem Geländer. Das Geländer weist bevorzugt eine Haltestrebe auf, an der der Führungsbügel des Geländers befestigt ist. Weiterhin ist es in dieser Ausführungsform bevorzugt, dass der Tragarm der Sicherheitseinrichtung an der Haltestrebe befestigt ist. Durch diese Anordnung kann ein Verstellen der Sicherheitseinrichtung von der Feldbetriebsstellung in die Sicherheitsstellung und/oder zurück an das Verstellen des Geländers von der Nutzungsstellung in die Ruhestellung und/oder zurück gekoppelt sein.

Dafür weist das Vorsatzgerät bevorzugt einen Aktuator, beispielsweise einen hydraulischen oder elektrohydraulischen Zylinder, einen Elektromotor oder einen Linearmotor auf, der zum Verstellen der Haltestrebe des Geländers vorgesehen ist. Die Sicherheitseinrichtung weist dafür bevorzugt Verbindungselemente auf, die beim Verstellen des Geländers das Verstellen der Sicherheitseinrichtung bewirken. Dadurch entfällt für den Bediener nicht nur die Montage und Demontage der Sicherheitseinrichtung. Sondern die Sicherheitseinrichtung wird zudem automatisch verstellt.

Besonders bevorzugt ist die Sicherheitseinrichtung um eine Tragarmachse reversibel von der Feldbetriebsstellung in die Sicherheitsstellung verschwenkbar. Ebenfalls bevorzugt ist das Geländer um eine Halteachse reversibel von der Nutzungsstellung in die Ruhestellung verschwenkbar.

In einer alternativen Ausführungsform wird die Sicherheitseinrichtung in ihrer Feldbetriebsstellung als Geländer genutzt. Bei dieser Ausführungsform ist sie zum Abstützen und Führen des Ernteguts vorgesehen. Die Feldbetriebsstellung der Sicherheitseinrichtung ist dann die Nutzungsstellung des Geländers, und die Sicherheitsstellung der Sicherheitseinrichtung die Ruhestellung des Geländers. Dadurch entfallen die Kosten für das Geländer. Der Aktuator ist bei dieser Ausführungsform bevorzugt zum Verstellen, insbesondere Verschwenken, des Tragarms vorgesehen.

Die Aufgabe wird weiterhin gelöst mit einer landwirtschaftlichen Arbeitsmaschine mit einem solchen Vorsatzgerät. Das Vorsatzgerät ist frontseitig der Arbeitsmaschine angeordnet. Es ist von einer Erntebetriebsanordnung, in der es bodennah geführt und zum Ernten des Ernteguts eingerichtet ist, reversibel in eine Straßentransportanordnung, in der es gegenüber der Erntebetriebsanordnung angehoben und für den Straßentransport eingerichtet ist, überführbar.

In einer bevorzugten Ausführungsform weist das Vorsatzgerät mehrere Komponenten mit jeweils einem Korpus und mindestens einem Schneid-, Führungs- und/oder Förderelement auf. Dabei ist es bevorzugt, dass mindestens eine der Komponenten eine Sicherheitseinrichtung aufweist, die in der Straßentransportanordnung des Vorsatzgerätes in die Sicherheitsstellung verstellt ist. Die mindestens eine Sicherheitseinrichtung wird dann als Schutz der Verkehrsteilnehmer genutzt.

Die Komponenten sind bevorzugt relativ zueinander klappbar vorgesehen. In der Erntebetriebsanordnung sind die Komponenten bevorzugt auseinander geklappt, so dass sie in Querrichtung aneinandergereiht angeordnet sind und sich das Vorsatzgerät in Querrichtung länglich erstreckt. Ein solches Vorsatzgerät erstreckt sich in der Regel in der Erntebetriebsanordnung in Querrichtung einseitig oder beidseitig über eine Breite der landwirtschaftlichen Arbeitsmaschine hinaus. Dadurch überschreitet es die auf der Straße maximal zulässige Transportbreite. Daher ist es weiterhin bevorzugt, dass das Vorsatzgerät von der Erntebetriebsanordnung automatisch in die Straßentransportanordnung zusammenklappbar ist. In der zusammen geklappten Straßentransportanordnung sind die Komponenten des Vorsatzgerätes bevorzugt in Erstreckungsrichtung übereinander angeordnet. Dadurch weist das Vorsatzgerät in der Straßentransportanordnung höchstens die maximal auf Straßen zulässige Transportbreite auf und überragt die landwirtschaftliche Arbeitsmaschine in Querrichtung nicht. Das Auseinanderklappen und das Zusammenklappen des Vorsatzgerätes sind bevorzugt vom Bediener an einer Handhabung auslösbar. Die Handhabung ist bevorzugt ein Schalter oder ein Hebel, der insbesondere an einem Bedienterminal, weiter insbesondere in einer Fahrerkabine der landwirtschaftlichen Arbeitsmaschine, angeordnet ist. Sie kann aber zusätzlich oder alternativ auch am Vorsatzgerät angeordnet sein.

In einer bevorzugten Ausführungsform ist die landwirtschaftliche Arbeitsmaschine dazu eingerichtet, die Sicherheitseinrichtung vor einem Zusammenklappen des Vorsatzgerätes von der Erntebetriebsanordnung in die Straßentransportanordnung automatisch von der Feldbetriebsstellung in die Sicherheitsstellung zu verstellen, und/oder die Sicherheitseinrichtung nach einem Auseinanderklappen des Vorsatzgerätes von der Straßentransportanordnung in die Erntebetriebsanordnung automatisch von der Sicherheitsstellung in die Feldbetriebsstellung zu verstellen. Dabei löst der Bediener das Verstellen der Sicherheitseinrichtung mit dem Klappen des Vorsatzgerätes automatisch aus. Indem der Bediener das Zusammenklappen oder Auseinanderklappen des Vorsatzgerätes, insbesondere in einer Fahrerkabine an einem Bedienterminal, auslöst, wird die Sicherheitseinrichtung automatisch mit verstellt. Das Verstellen der Sicherheitseinrichtung erfolgt daher ohne Montageaufwand für den Bediener, ohne Zeitverlust und aufwandsfrei. In einer bevorzugten Ausführungsform kann die landwirtschaftliche Arbeitsmaschine alternativ oder zusätzlich eine Handhabung aufweisen, mit der das Verstellen der Sicherheitseinrichtung unabhängig vom Zusammenklappen oder Auseinanderklappen des Vorsatzgerätes auslösbar ist.

In der Ausführungsform, in der die landwirtschaftliche Arbeitsmaschine ein Geländer aufweist, an dem die Sicherheitseinrichtung befestigt ist, ist die landwirtschaftliche Arbeitsmaschine bevorzugt dazu eingerichtet, das Geländer vor dem Zusammenklappen des Vorsatzgerätes von der Nutzungsstellung in die Ruhestellung, oder nach dem Auseinanderklappen des Vorsatzgerätes von der Ruhestellung in die Nutzungsstellung zu verschwenken. Dabei wird bevorzugt automatisch die Sicherheitseinrichtung von der Sicherheitsstellung in die Feldbetriebsstellung oder zurück mit verstellt. Auch in dieser Ausführungsform erfolgt das Verstellen der Sicherheitseinrichtung daher vor oder nach dem Klappen des Vorsatzgerätes. Bei dieser Ausführungsform ist es alternativ oder zusätzlich ebenfalls bevorzugt, dass die landwirtschaftliche Arbeitsmaschine eine Handhabung aufweist, mit der das Verstellen des Geländers abhängig vom Zusammenklappen oder Auseinanderklappen des Vorsatzgerätes auslösbar ist. Prinzipiell kann die Handhabung auch so eingerichtet sein, dass das Verstellen des Geländers unabhängig vom Zusammenklappen oder Auseinanderklappen des Vorsatzgerätes auslösbar ist.

Das Klappen des Vorsatzgerätes, das Verstellen des Geländers und/oder das Verstellen der Sicherheitseinrichtung können weiterhin von einem mobilen Gerät wie beispielsweise einem Tablet oder Smartphone aus gemeinsam oder unabhängig voneinander auslösbar sein.

Die Aufgabe wird weiterhin gelöst mit einem Verfahren zum Überführen eines solchen Vorsatzgerätes zum Ernten von stängeligem Erntegut
- von einer Erntebetriebsanordnung in eine Straßentransportanordnung,
- oder zurück,
bei dem eine Sicherheitseinrichtung des Vorsatzgerätes, die zum Schutz von Verkehrsteilnehmern beim Straßentransport des Vorsatzgerätes vorgesehen ist,
- automatisch von einer Feldbetriebsstellung, in der sie in einer Erstreckungsrichtung oberhalb und/oder in einer Fahrtrichtung hinter einem Schneid-, Führungs- und/oder Förderelement angeordnet ist,
   in eine Sicherheitsstellung verstellt wird, in der sie dem Schneid-, Führungs- und/oder Förderelement in Fahrtrichtung vorgelagert ist,
- oder zurück.

Für den Bediener erfolgt das Verstellen der Sicherheitseinrichtung daher ohne Montageaufwand und ohne Zeitverlust.

Dabei wird die Sicherheitseinrichtung bei einem Vorsatzgerät, das wenigstens ein oder mehrere klappbare Seitenteile umfasst bevorzugt
- vor einem Zusammenklappen der Seitenteile des Vorsatzgerätes von der Erntebetriebsanordnung in die Straßentransportanordnung automatisch von der Feldbetriebsstellung in die Sicherheitsstellung, und/oder
- nach einem Auseinanderklappen der Seitenteile des Vorsatzgerätes von der Straßentransportanordnung in die Erntebetriebsanordnung automatisch von der Sicherheitsstellung in die Feldbetriebsstellung,
verstellt, so dass die Sicherheitseinrichtung nicht beim Zusammen- oder Auseinanderklappen der Seitenteile beschädigt wird.

In einer bevorzugten Ausführungsform, bei der das Vorsatzgerät ein Geländer umfasst, das reversibel von einer Nutzungsstellung in eine Ruhestellung verstellbar ist, wird die Sicherheitseinrichtung bevorzugt beim Verstellen des Geländers, insbesondere von der Nutzungsstellung in die Ruhestellung von der Feldbetriebsstellung in die Sicherheitsstellung und beim Verstellen des Geländers von der Ruhestellung in die Nutzungsstellung von der Sicherheitsstellung in die Feldbetriebsstellung, automatisch mit verstellt. Dadurch kann derselbe Aktuator sowohl für das Verstellen des Geländers als auch für das Verstellen der Sicherheitseinrichtung genutzt werden. In einer weiteren, nicht dargestellten Ausführungsform kann auch ein separater Aktuator die Sicherheitseinrichtung betätigen.

Dabei ist es weiterhin bevorzugt, dass das Verstellen der Sicherheitseinrichtung von der Feldbetriebsstellung in die Sicherheitsstellung oder zurück durch Auslösen des Überführens des Vorsatzgerätes von der Erntebetriebsanordnung in die Straßentransportanordnung oder zurück, und/oder durch Auslösen des Verstellens des Geländers von der Nutzungsstellung in die Ruhestellung oder zurück, ausgelöst wird. Dies erfolgt bevorzugt bei einer Inbetriebnahme oder Außerbetriebnahme des Vorsatzgerätes.

Im Folgenden wird die Erfindung anhand von Figuren beschrieben. Die Figuren sind lediglich beispielhaft und schränken den allgemeinen Erfindungsgedanken nicht ein. Es zeigen
- Fig. 1: schematisch eine landwirtschaftliche Arbeitsmaschine mit einem erfindungsgemäßen Vorsatzgerät in einer Straßentransportanordnung;
- Fig. 2: in (a) und (b) das Vorsatzgerät der Fig. 1 in Erntebetriebsanordnung jeweils in verschiedenen perspektivischen Ansichten, und in (c) einen vergrößerten Ausschnitt aus der Fig. 2 (b);
- Fig. 3: in (a) und (b) jeweils eine Komponente des Vorsatzgerätes der Fig. 1 und 2, wobei in (a) eine Sicherheitseinrichtung des Vorsatzgerätes in einer Zwischenstellung und in (b) in einer Sicherheitsstellung positioniert ist.

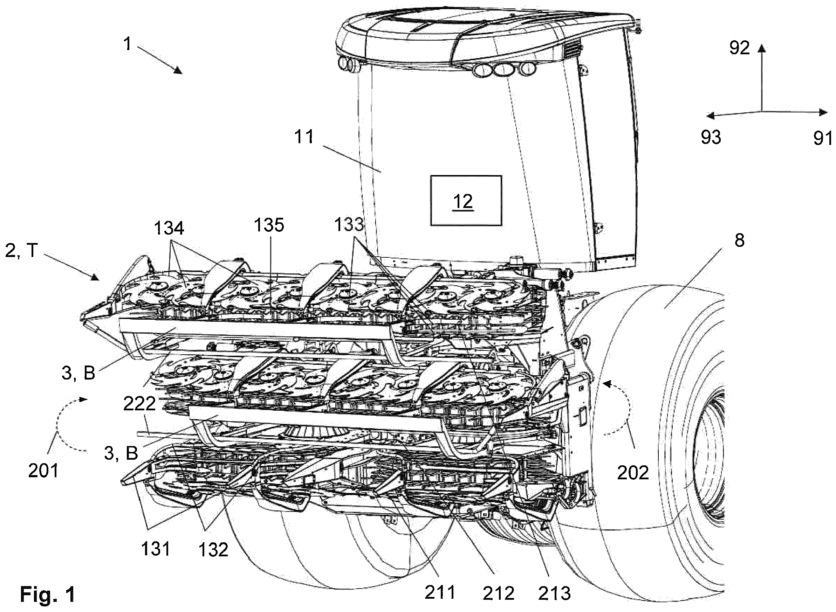

Fig. 1 zeigt schematisch eine landwirtschaftliche Arbeitsmaschine 1 mit einem erfindungsgemäßen Vorsatzgerät 2 in einer Straßentransportanordnung T. Von der landwirtschaftlichen Arbeitsmaschine 1 sind hier der Anschauung halber nur die Vorderräder 8 sowie eine Fahrerkabine 11 gezeigt.

Das Vorsatzgerät 2 ist frontseitig, das heißt in einer Fahrtrichtung 93 der landwirtschaftlichen Arbeitsmaschine 1 vorn angeordnet. Es ist dafür vorgesehen, Erntegut (nicht gezeigt) aufzunehmen und in die landwirtschaftliche Arbeitsmaschine 1 zu befördern.

Bei der landwirtschaftlichen Arbeitsmaschine 1 handelt sich um einen Feldhäcksler. Im Folgenden werden daher die Begriffe landwirtschaftliche Arbeitsmaschine 1 und Feldhäcksler synonym verwendet.

Das Ausführungsbeispiel zeigt als Vorsatzgerät 2 ein reihenunabhängiges Maisgebiss. Die Erfindung ist aber nicht auf ein solches, reihenunabhängiges Maisgebiss beschränkt, sondern sie umfasst auch andere Vorsatzgeräte 2 wie beispielsweise reihenabhängige Maisgebisse oder Vorsatzgeräte 2 zum Ernten von anderem Erntegut. Im Folgenden werden die Begriffe Vorsatzgerät 2 und Maisgebiss synonym verwendet.

Das Vorsatzgerät 2 weist mehrere zueinander klappbare Komponenten 211, 212, 213 auf. Dadurch ist es von einer Erntebetriebsanordnung E, in der die Komponenten 211 - 213 auseinander geklappt sind, in die hier gezeigte Straßentransportanordnung T und zurück klappbar.

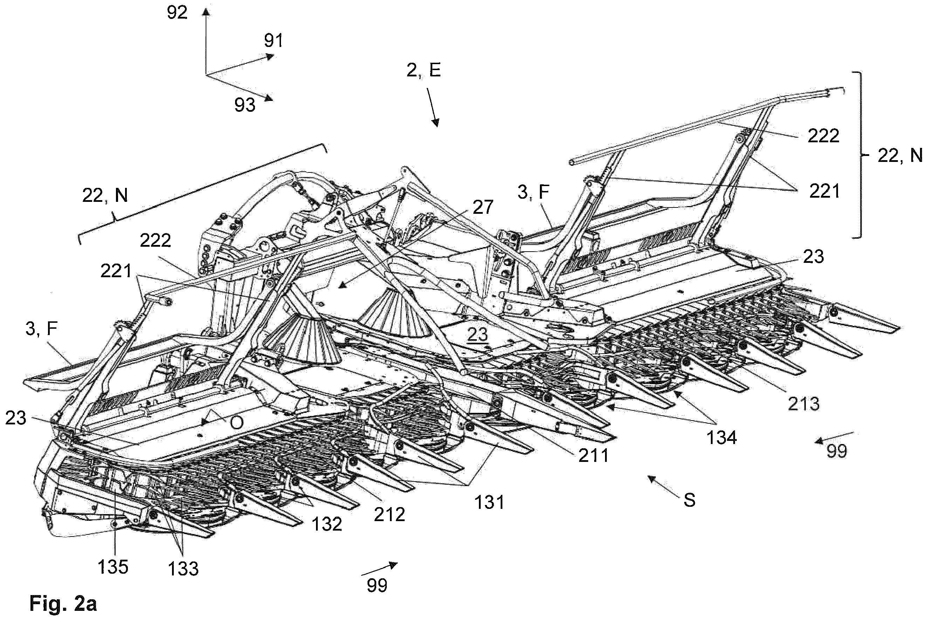

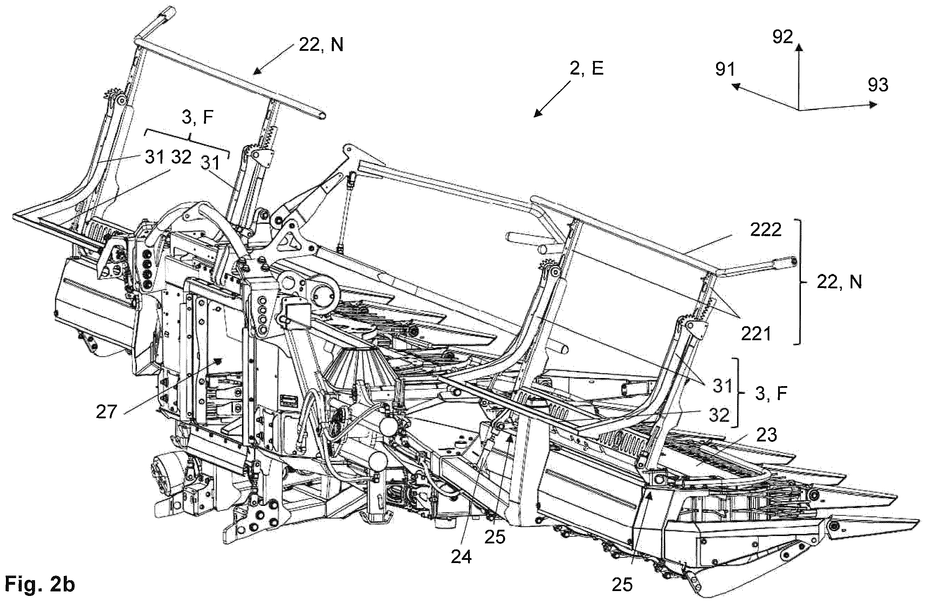

In der auseinander geklappten Erntebetriebsanordnung E sind die Komponenten 211 - 213 des Vorsatzgerätes 2 in einer Querrichtung 91, insbesondere quer zur Fahrtrichtung 93, der Arbeitsmaschine 1 aneinandergereiht angeordnet, so dass sich das Vorsatzgerät 2, insbesondere in Querrichtung 91, länglich und hier beidseitig über die landwirtschaftliche Arbeitsmaschine 1 hinaus erstreckt. Das Vorsatzgerät 2 in der Erntebetriebsanordnung E zeigen die Fig. 2 (a) und (b).

In der zusammen geklappten Straßentransportanordnung T sind die Komponenten 211 - 213 des Vorsatzgerätes 2 hingegen in eine Erstreckungsrichtung 92, insbesondere quer zur Fahrtrichtung 93 und quer zur Querrichtung 91, übereinander angeordnet. Dies zeigt Fig. 1. Dadurch überragt das Vorsatzgerät 2 die Arbeitsmaschine 1 in der Straßentransportanordnung T in Querrichtung 91 beidseitig nicht.

Die drei Komponenten 211 - 213 des Vorsatzgerätes 2 sind hier ein Mittelteil 211 an dem beidseitig jeweils ein Seitenteil 212, 213 angeordnet ist. Die Seitenteile 212, 213 sind jeweils um wenigstens eine sich im Wesentlichen in Fahrtrichtung 93 erstreckende Klappachse (nicht dargestellt) relativ zum Mittelteil 211 klappbar.

Beim Zusammenklappen des Vorsatzgerätes 2 von der Erntebetriebsanordnung E in die Straßentransportanordnung T wird zunächst ein erstes der beiden Seitenteile 212 relativ zum Mittelteil 211 in eine erste Klapprichtung, die hier durch einen gestrichelten Pfeil 201 schematisch dargestellt ist, geklappt, bis es oberhalb des Mittelteils 211 angeordnet ist. Danach wird das zweite der beiden Seitenteile 213 relativ zum Mittelteil 211 in eine zweite Klapprichtung, die hier ebenfalls durch einen gestrichelten Pfeil 202 schematisch dargestellt ist, geklappt, bis es oberhalb des ersten Seitenteils 212 angeordnet ist. Das Auseinanderklappen des Vorsatzgerätes 2 erfolgt in umgekehrter Reihenfolge.

Das Auseinanderklappen und Zusammenklappen des Vorsatzgerätes 2 kann an einer Handhabung durch den Bediener ausgelöst werden und wird anschließend mittels Klappaktuatoren automatisch durchgeführt. Die dafür erforderlichen Klappaktuatoren sind hier nicht dargestellt. Als Handhabung ist hier beispielhaft ein Bedienterminal 12 in der Fahrerkabine 11 schematisch gezeigt. Alternativ oder zusätzlich kann eine Handhabung (nicht gezeigt), beispielsweise ein Schalter oder Hebel, am Vorsatzgerät 2 angeordnet sein.

Sichtbar ist, dass am Vorsatzgerät 2 Sicherheitseinrichtungen 3 angeordnet sind, die in der Straßentransportanordnung T Schneid-, Führungs- und/oder Förderelementen 131 - 135 des Vorsatzgerätes 2 in Fahrtrichtung 93 vorgelagert sind, so dass sich ein Verkehrsteilnehmer daran abstützen kann, ohne in die Schneid-, Führungs- und/oder Förderelemente 131 - 135 dafür ergreifen zu müssen. Als Schneid-, Führungs- und/oder Förderelemente 131 - 135 sind hier beispielhaft Halm- und Reihenteiler 131, Einweisbügel 132, Mitnehmer 133 eines Endlosförderers 135 und Schneidscheiben 134 gezeigt.

Die Sicherheitseinrichtungen 3 befinden sich in Fig. 1 in einer Sicherheitsstellung B. Dabei ist hier eine erste Sicherheitseinrichtung 3 an dem ersten der beiden Seitenteile 212 und eine zweite Sicherheitseinrichtung 3 an dem zweiten der beiden Seitenteile 213 befestigt. Die beiden Seitenteile 212, 213 sind in der Straßentransportanordnung T oberhalb des Mittelteils 211 positioniert. Dadurch befinden sich die Sicherheitseinrichtungen 3 in der Sicherheitsstellung B auf einer Höhe (nicht bezeichnet), in der sich ein durchschnittlich großer Mensch oder ein durchschnittlich hoch sitzender Fahrradfahrer an ihnen bequem, das heißt ohne sich strecken zu müssen, abstützen kann.

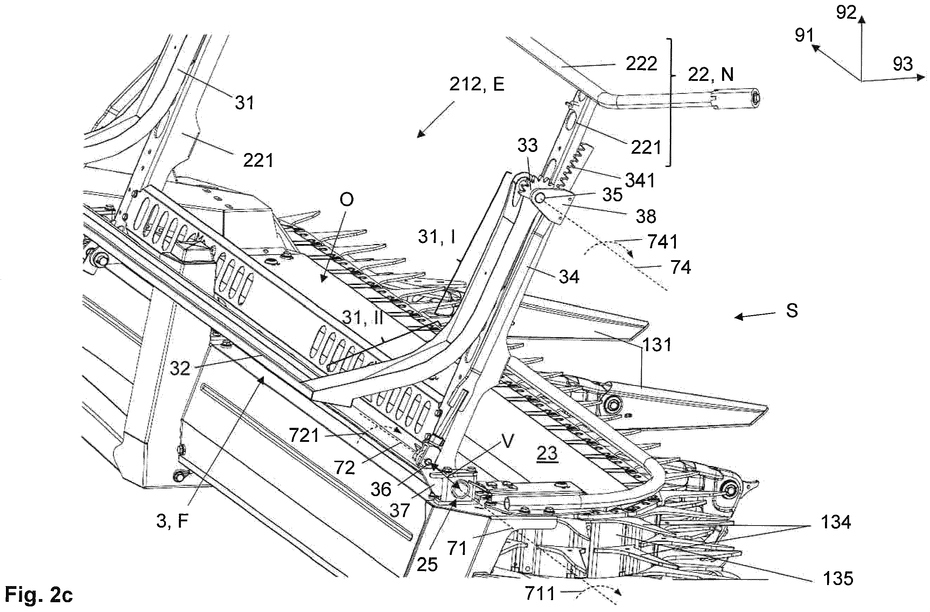

Sichtbar sind bei dem hier dargestellten Vorsatzgerät 2 zudem zwei Führungsbügel 222 von Geländern 22 (s. Fig. 2), die jeweils an einem der beiden Seitenteile 212, 213 angeordnet sind.

Fig. 2 zeigt in (a) und (b) das Vorsatzgerät 2 der Fig. 1 in Erntebetriebsanordnung E jeweils in verschiedenen perspektivischen Ansichten, und Fig. 2 (c) zeigt einen vergrößerten Ausschnitt aus der Fig. 2 (b). In Fig. 2 (a) ist vornehmlich eine Stirnseite S in Fahrtrichtung 93 vorn, und in Fig. 2(b) eine Rückseite (nicht bezeichnet) in Fahrtrichtung 93 hinter dem Vorsatzgerät 2 gezeigt.

Das Vorsatzgerät 2 weist die drei Komponenten 211 - 213 auf, nämlich das Mittelteil 211, sowie die beiden Seitenteile 212, 213. Jede der Komponenten 211 - 213 weist einen Korpus 23 auf, der durch Rahmen- und Gehäusebauteile gebildet ist. Dabei sind die Seitenteile 212, 213 in der Erntebetriebsanordnung E beidseitig des Mittelteils 211 angeordnet, so dass sich das Vorsatzgerät 2 länglich, insbesondere in Querrichtung 91, erstreckt.

In Fahrtrichtung 93 vorn sind über eine gesamte Länge (nicht bezeichnet) des Vorsatzgerätes 2 gleichmäßig verteilt Halm- und Reihenteiler 131 sowie Einweisbügel 132 angeordnet, die zum Führen, Anheben und/oder Teilen des Ernteguts vorgesehen sind. Die Halm- und Reihenteiler 131 sind pyramidenförmig ausgebildet und erstrecken sich in Fahrtrichtung 51. Sie bilden gemeinsam mit den Einweisbügeln 132 eine Baugruppe. Die Halm- und Reihenteiler 131 sowie Einweisbügel 132 vereinfachen, insbesondere bei liegendem oder teilweise liegendem stängelartigem Erntegut, das Schneiden des Erntegutes im Erntebetrieb, so dass ein sauberer Schnitt auf etwa gleichbleibender Höhe möglich ist. Zudem unterstützen sie das Zuführen des Ernteguts zu einem Auslass 27 des Vorsatzgerätes, durch den das Erntegut in einen Einzugskanal (nicht gezeigt) des Feldhäckslers 1 gefördert wird, um im Feldhäcksler 1 weiter verarbeitet zu werden.

Das Maisgebiss 2 weist zudem sowohl an beiden Seitenteilen 212, 213 als auch am Mittelteil 211 Endlosförderer 135 auf. Die Endlosförderer 135 sind dazu ausgebildet, das Erntegut zum Auslass 27 zu fördern. Der Auslass 27 des Vorsatzgerätes 2 ist annähernd mittig angeordnet. Beidseitig der Mitte (nicht bezeichnet) werden die Endlosförderer 135 daher in entgegengesetzte Förderrichtungen 99 angetrieben. An den Endlosförderern 135 sind jeweils eine Vielzahl Mitnehmer 133 mehrreihig angeordnet, die zum Erfassen und Fördern des geschnittenen Ernteguts vorgesehen sind.

Zum Schneiden des Ernteguts sind in Fahrtrichtung 93 hinter den Halm- und Reihenteilern 131 eine Vielzahl Schneidscheiben 134 angeordnet. Die Schneidscheiben 134 sind in Erstreckungsrichtung 92 unterhalb der Endlosförderer 135 angeordnet. Sie weisen einen ausreichend großen Umfang (nicht gezeigt) auf, um das Erntegut bereits vor dem Erfassen durch die Mitnehmer 133 zu schneiden.

Das Vorsatzgerät 2 weist zudem an beiden Seitenteilen 212, 213 jeweils ein Geländer 22 auf. Die Geländer 22 weisen jeweils einen Führungsbügel 222 zur Pflanzenführung auf, der mittels zweier Haltestreben 221 an einer Oberseite O (s. Fig. 2 (a) und (c)) des jeweiligen Korpus 23 befestigt ist. In der Erntebetriebsanordnung E sind sie vom jeweiligen Korpus 23 beabstandet. Die Führungsbügel 222 erstrecken sich in Erstreckungsrichtung 92 oberhalb des Korpus 23 und jeweils über die Haltestreben 221 hinaus zu einem freien Ende (nicht bezeichnet) hin. Dadurch erstrecken sie sich in der Erntebetriebsanordnung E des Vorsatzgerätes 2 jeweils im Wesentlichen über eine gesamte Länge (nicht bezeichnet) desjenigen Seitenteils 212, 213, an dem sie befestigt sind. Die Führungsbügel 222 sind zum Abstützen des stängeligen Ernteguts während des Förderns in Förderrichtung 99 zum Auslass 27 vorgesehen.

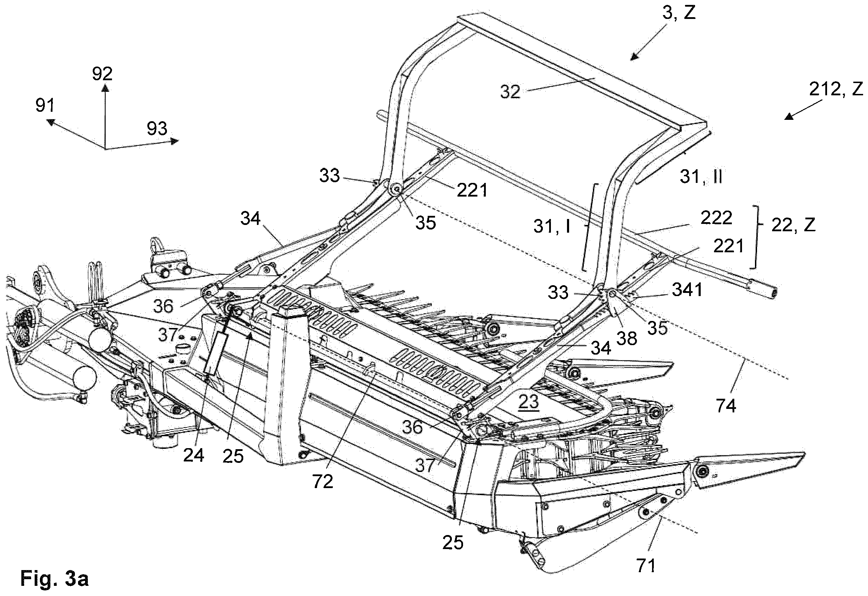

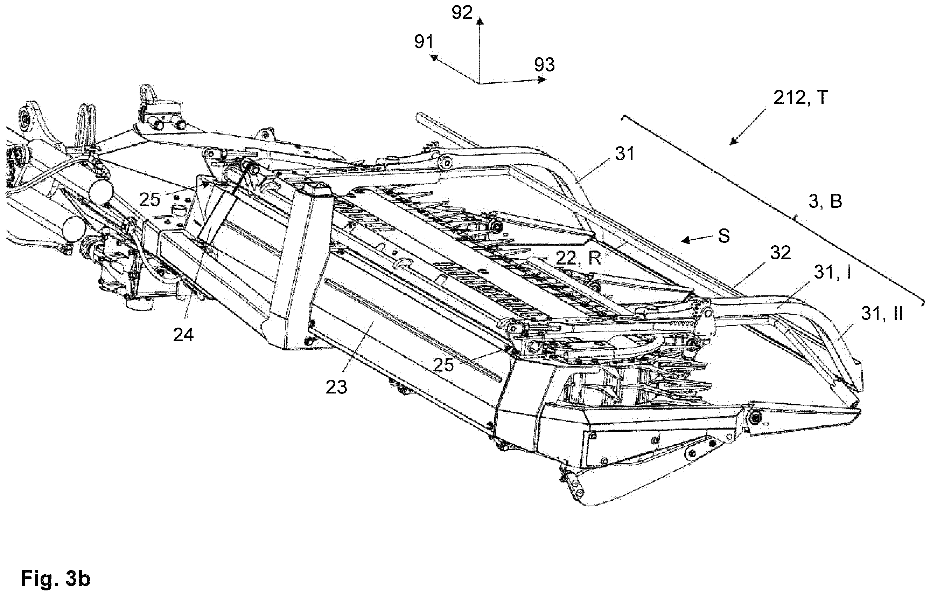

Die Haltestreben 221 sind jeweils um eine Halteachse 71, die sich im Wesentlichen parallel zur Querrichtung 91 erstreckt, drehbar befestigt. Dadurch sind die Geländer 22 jeweils reversibel von einer Nutzungsstellung N, in der die Führungsbügel 222 jeweils oberhalb des Korpus 23 und von diesem beabstandet angeordnet sind, in eine Ruhestellung R, insbesondere in eine Halteschwenkrichtung 711, um die Halteachse 71 schwenkbar. In der Ruhestellung R sind sie gegenüber der Nutzungsstellung N in Erstreckungsrichtung 92 abgesenkt. Die Fig. 2 (a) und (b) zeigen die Geländer 22 in der Nutzungsstellung N. Fig. 3 (a) zeigt eines der Geländer 22 in einer Zwischenstellung Z, und Fig. 3 (b) zeigt das Geländer 22 in der Ruhestellung R.

Zum Verschwenken der Geländer 22 von der Nutzungsstellung N in die Ruhestellung R und/oder zurück weist das Vorsatzgerät 2 für jedes Geländer 22 jeweils einen als Aktuator dienenden hydraulischen Zylinder 24 auf, der jeweils an einer der Haltestreben 221 der Geländer 22 befestigt ist (s. Fig. 2 (b), 3 (a), (b)). Die Zylinder 24 können mittels der Handhabung 12, das ist hier beispielhaft das Bedienterminal 12 in der Fahrerkabine 11, betätigt werden. Zudem kann vorgesehen sein, dass sie automatisch betätigt werden, nachdem das Vorsatzgerät 2 aus der Straßentransportanordnung T in die Erntebetriebsanordnung E geklappt wurde, und daher insbesondere bei der Inbetriebnahme des Vorsatzgerätes 2, oder bevor es von der Erntebetriebsanordnung E in die Straßentransportanordnung T geklappt wird, und daher insbesondere bei der Außerbetriebnahme des Vorsatzgerätes 2. Die Geländer 22 werden dann automatisch von der Ruhestellung R in die Nutzungsstellung N verschwenkt, nachdem das Vorsatzgerät 2 die Erntebetriebsanordnung E erreicht hat. Weiterhin werden sie dann automatisch von der Nutzungsstellung N in die Ruhestellung R verschwenkt, bevor das Vorsatzgerät 2 in die Straßentransportanordnung T geklappt wird.

Die Haltestreben 221 sind dafür jeweils in einem Geländerlager 25, das am Korpus 23 angeordnet ist, drehbar gelagert. Die Geländerlager 25 sind fluchtend zueinander angeordnet, so dass die Haltestreben 221 um eine gemeinsame Halteachse 71 schwenkbar sind. Der hydraulische Zylinder 24 ist mit einem Ende (nicht bezeichnet) an einem Rahmenbauteil (nicht bezeichnet) des Vorsatzgerätes 2 und mit einem gegenüberliegenden, insbesondere kolbenseitigen Ende (nicht bezeichnet) an einer der Haltestreben 221 befestigt. Daher kann das Geländer 22 durch Ausfahren des Zylinders 24 reversibel von der Nutzungsstellung N in die Ruhestellung R verschwenkt werden.

Das Vorsatzgerät 2 weist außerdem die Sicherheitseinrichtungen 3 auf. Die Sicherheitseinrichtungen 3 dienen als Verletzungsschutz für Straßenverkehrsteilnehmer beim Straßentransport T des Vorsatzgerätes 2. An beiden Geländern 22 ist jeweils eine Sicherheitseinrichtung 3 befestigt.

Die Sicherheitseinrichtungen 3 sind zwar spiegelsymmetrisch aber im Übrigen baugleich aufgebaut. Sie werden daher im Folgenden beispielhaft anhand der am ersten der beiden Seitenteile 212, 213 angeordneten Sicherheitseinrichtung 3 beschrieben.

Die Sicherheitseinrichtung 3 weist einen Querarm 32 auf, der sich in die Querrichtung 91 erstreckt. Weiterhin umfasst sie zwei Tragarme 31, an denen der Querarm 32 befestigt ist. Die Tragarme 31 sind baugleich. Zudem sind sie parallel zueinander angeordnet. Weiterhin weisen sie eine Biegung (nicht bezeichnet) auf, so dass sich ein erster Teil I der Tragarme 31 in einem Winkel (nicht bezeichnet) zu einem zweiten Teil II der Tragarme 31 erstreckt. Der Querarm 32 erstreckt sich von einem der beiden Tragarme 31 zum anderen Tragarm 31.

Die Tragarme 31 sind jeweils an einer Haltestrebe 221 des Geländers 22 um eine Tragarmachse 74 (s. Fig. 2c), insbesondere in eine Tragarmschwenkrichtung 741, reversibel schwenkbar gehaltert. Dafür ist an den Haltestreben 221 jeweils ein Halter 38 vorgesehen, in dem ein Achssteg 35 drehbar gelagert ist. Die Tragarme 31 sind jeweils an dem Achssteg 35 drehfest befestigt.

Um die Sicherheitseinrichtung 3 gemeinsam mit dem Geländer 22 zu verschwenken, ist jeweils zwischen demjenigen Tragarm 31 der Sicherheitseinrichtung 3 und demjenigen Geländerlager 25 des Geländers 22, an dem diejenige Haltestrebe 221 gelagert ist, an der der Tragarm 31 befestigt ist, eine Verbindungsstrebe 34 vorgesehen. Die Sicherheitseinrichtung 3 weist daher zwei Verbindungsstreben 34 auf, nämlich für jede Haltestrebe 221 eine.

Die Verbindungsstreben 34 sind Bestandteil eines Kopplungsmechanismus (nicht bezeichnet), der für jeden der Tragarme 31 gegebenenfalls spiegelsymmetrisch aber im Übrigen im Wesentlichen baugleich vorgesehen ist. im Folgenden wird der Kopplungsmechanismus anhand von einer Verbindungsstrebe 34 beschrieben.

Die Verbindungsstrebe 34 weist eine Zahnleiste 341 auf, die mit einem Stirnrad 33, das am Achssteg 35 drehfest befestigt ist, in kämmendem Eingriff ist. Eine Halteplatte 37 ist drehfest um die Halteachse 71 befestigt. Sie weist ein Verbindungslager 36 auf, das um einen Versatz V räumlich zur Halteachse 71 versetzt angeordnet ist. Die Verbindungsstrebe 34 ist reversibel um eine Verbindungsachse 72 drehbar im Verbindungslager 36 gelagert.

Beim Verschwenken des Geländers 22 um die Halteachse 71 wird die Verbindungsstrebe 34, und mit ihr die Zahnleiste 341, im Halter 38 verschoben, da die Verbindungsachse 72 des Verbindungslagers 36 in den Versatz V von der Halteachse 71 beabstandet positioniert ist. Da das Stirnrad 33 mit der Zahnleiste 341 in kämmendem Eingriff ist, dreht sich dabei das Stirnrad 33. Da das Stirnrad 33 drehfest an dem Achssteg 35 befestigt ist, wird der Tragarm 31 dabei um die Tragarmachse 74 verschwenkt.

Sowohl die beiden Verbindungslager 36 als auch die beiden Achsstege 35 der Sicherheitseinrichtung 3 sind fluchtend zueinander angeordnet, so dass die Verbindungsstreben 34 um eine gemeinsame Verbindungsachse 72, und die Tragarme 31 um eine gemeinsame Tragarmachse 74 schwenkbar sind. Daher wird die Sicherheitseinrichtung 3 beim Verschwenken des Geländers 22 mit diesem verschwenkt.

Denkbar ist auch eine Betätigung der Sicherheitseinrichtung 3 durch Lenker (nicht gezeigt) und/oder Kipphebel (nicht gezeigt), um eine Relativbewegung zwischen der Sicherheitseinrichtung 3 und dem Geländer 22 bei der Überführung von der Erntebetriebsanordnung E in die Straßentransportanordnung T und zurück zu ermöglichen.

Die Fig. 2 (a) - (c) zeigen die Sicherheitseinrichtung 3 in einer Feldbetriebsstellung F. Das Vorsatzgerät 2 befindet sich dabei in der Erntebetriebsanordnung E und das Geländer 22 in der Nutzungsstellung N.

Bei dem hier dargestellten Vorsatzgerät 2 ist die Sicherheitseinrichtung 3 in der Feldbetriebsstellung F, insbesondere in Fahrtrichtung 93, hinter dem Geländer 22 angeordnet. Aufgrund der Biegung im Tragarm 31 ist der erste Teil I des Tragarms 31 etwa parallel zum Haltearm 221 angeordnet, und der zweite Teil II des Tragarms 31 erstreckt sich vom Haltearm 221 ausgehend, insbesondere gegen die Fahrtrichtung 93, weg. Dadurch ist der Querarm 32, insbesondere in Fahrtrichtung 93, hinter dem Korpus 23 positioniert. Er ist dadurch in der Erntebetriebsanordnung E des Vorsatzgerätes 2 außerhalb des Erntegutflusses angeordnet und behindert diesen daher nicht.

In den Fig. 3 ist in (a) und (b) jeweils eine Komponente 212 des Vorsatzgerätes 2 der Fig. 1 und 2 dargestellt, nämlich hier das erste der beiden Seitenteile 212 des Vorsatzgerätes 2. Fig. 3 (a) zeigt die Sicherheitseinrichtung 3 des Vorsatzgerätes 2 in einer Zwischenstellung Z, die sie beim Verschwenken von der Feldbetriebsstellung F in die Sicherheitsstellung B oder zurück einnimmt.

Beim Verschwenken wird das Geländer 22, insbesondere gegen die Erstreckungsrichtung 92, abgesenkt. Dabei wird auch die Sicherheitseinrichtung 3 abgesenkt. Zudem wird der Querarm 32 nach vorne geschwenkt.

Fig. 3 (b) zeigt die Sicherheitseinrichtung 3 in der Sicherheitsstellung B. Das Geländer 22 befindet sich dabei in der Ruhestellung R. Dabei liegen die Haltestreben 221 zumindest teilweise am Korpus 23 an. Das Vorsatzgerät 2 befindet sich noch in der Erntebetriebsanordnung E.

Der erste Teil I der Tragarme 31 der Sicherheitseinrichtung 3 erstreckt sich in der Sicherheitsstellung B jeweils entlang eines Haltearms 221. Aufgrund der Biegung der Tragarme 31 erstreckt sich der zweite Teil II der Tragarme 31, insbesondere gegen die Erstreckungsrichtung 92, zum Boden hin. Die Tragarme 31 übergreifen daher den Führungsbügel 222 des Geländers 22. Dadurch ist das Geländer 22 in der Sicherheitsstellung B der Sicherheitseinrichtung 3 in Fahrtrichtung 93 hinter dem Querarm 32 angeordnet. Zudem ist der Querarm 32 dadurch den Schneid-, Führungs- und/oder Förderelementen 131 - 135 dieses Seitenteils 212 des Vorsatzgerätes 2 vorgelagert. Es ist hier so positioniert, dass es den in Fahrtrichtung 93 den Korpus 23 am weitesten überragenden Schneid-, Führungs- und/oder Förderelementen 131 - 135 vorgelagert ist. Das sind hier die Halm- und Reihenteiler 131, deren Spitzen (nicht bezeichnet) es verdeckt.

In dieser Position können die Seitenteile 211 - 213 des Vorsatzgerätes 2 geklappt werden, ohne das Geländer 22 und/oder die Sicherheitseinrichtung 3 zu beschädigen. Dadurch kann das Vorsatzgerät 2 von der Erntebetriebsanordnung E in die Straßentransportanordnung T überführt werden.

## Patentansprüche

1. Vorsatzgerät (2) zum Ernten von stängeligem Erntegut, mit mindestens einem Schneid-, Führungs- und/oder Förderelement (131 - 135) zum Schneiden, Führen und/oder Fördern des Erntegutes, das an einer in einer Fahrtrichtung (93) vorn angeordneten Stirnseite (S) einen Korpus (23) des Vorsatzgerätes (2) überragt, wobei am Vorsatzgerät (2) eine Sicherheitseinrichtung (3) angeordnet ist, die zum Schutz von Verkehrsteilnehmern beim Straßentransport des Vorsatzgerätes (2) dient, und die von einer Feldbetriebsstellung (F) in eine Sicherheitsstellung (B), in der sie dem Schneid-, Führungs- und/oder Förderelement (131 - 135) in Fahrtrichtung (93) vorgelagert ist, verstellbar ist, wobei die Sicherheitseinrichtung (3) einen Querarm (32) umfasst, der eine Erstreckungskomponente in eine Querrichtung (91) quer zur Fahrtrichtung (93) aufweist, oder der sich in Querrichtung (91) erstreckt,
**dadurch gekennzeichnet, dass**
der Querarm (32) in der Feldbetriebsstellung (F) in Fahrtrichtung (93) hinter und/oder in einer Erstreckungsrichtung (92), die sich quer zur Fahrtrichtung (93) und quer zur Querrichtung (91) erstreckt, oberhalb des Korpus (23) angeordnet ist.

2. Vorsatzgerät (2) nach Anspruch 1, **dadurch gekennzeichnet, dass** die Sicherheitseinrichtung (3) in der Sicherheitsstellung (B) demjenigen Schneid-, Führungs- und/oder Förderelement (131 - 135), das den Korpus (23) am weitesten überragt, vorgelagert ist.

3. Vorsatzgerät (2) nach einem der vorherigen Ansprüche, **dadurch gekennzeichnet, dass** die Sicherheitseinrichtung (3) reversibel von der Sicherheitsstellung (B) in eine Feldbetriebsstellung (F) verschiebbar und/oder verschwenkbar ist.

4. Vorsatzgerät (2) nach einem der vorherigen Ansprüche, **dadurch gekennzeichnet, dass** die Sicherheitseinrichtung (3) einen Tragarm (31) umfasst, an dem der Querarm (32) befestigt ist, wobei die Sicherheitseinrichtung (3) durch Verschieben, Verlängern und/oder Verschwenken des Tragarms (31) reversibel von der Sicherheitsstellung (B) in die Feldbetriebsstellung (F) überführbar ist.

5. Vorsatzgerät (2) nach einem der vorherigen Ansprüche, **dadurch gekennzeichnet, dass** das Vorsatzgerät (2) ein Geländer (22) umfasst, das von einer, insbesondere für den Erntebetrieb vorgesehenen, Nutzungsstellung (N), in der ein Führungsbügel (222) des Geländers (22) oberhalb des Korpus (23) und von diesem beabstandet angeordnet ist, in eine, insbesondere für den Straßentransport vorgesehene, Ruhestellung (R) überführbar ist, in der der Führungsbügel (222) gegenüber der Nutzungsstellung (N) in Erstreckungsrichtung (92) abgesenkt ist.

6. Vorsatzgerät (2) nach einem der vorherigen Ansprüche, **dadurch gekennzeichnet, dass** die Sicherheitseinrichtung (3) am Korpus (23) oder am Geländer (22) gehaltert ist.

7. Vorsatzgerät (2) nach einem der vorherigen Ansprüche, **dadurch gekennzeichnet, dass** es dazu eingerichtet ist, die Sicherheitseinrichtung (3) beim Verstellen des Geländers (22) von der Nutzungsstellung (N) in die Ruhestellung (R) automatisch von der Feldbetriebsstellung (F) in die Sicherheitsstellung (B), und/oder beim Zurückstellen automatisch zurück, zu verstellen.

8. Vorsatzgerät (2) nach einem der vorherigen Ansprüche, **dadurch gekennzeichnet, dass** es dazu eingerichtet ist, das Verstellen der Sicherheitseinrichtung (3) auszulösen, wenn das Überführen des Vorsatzgerätes (2) von der Erntebetriebsanordnung (E) in die Straßentransportanordnung (T) oder zurück ausgelöst wird.

9. Vorsatzgerät (2) nach einem der Ansprüche 1 - 4, **dadurch gekennzeichnet, dass** die Sicherheitseinrichtung (3) in der Erntebetriebsanordnung (E) des Vorsatzgerätes (2) als Geländer (22) dient.

10. Landwirtschaftliche Arbeitsmaschine (1) mit einem Vorsatzgerät (2) nach einem der vorherigen Ansprüche.

11. Verfahren zum Überführen eines Vorsatzgerätes (2) zum Ernten von stängeligem Erntegut nach einem der Ansprüche 1 - 9
• von einer Erntebetriebsanordnung (E) in eine Straßentransportanordnung (T),
• oder zurück,
bei dem eine Sicherheitseinrichtung (3) des Vorsatzgerätes (2), die zum Schutz von Verkehrsteilnehmern beim Straßentransport des Vorsatzgerätes (2) dient,
• von einer Feldbetriebsstellung (F), in der sie in einer Erstreckungsrichtung (92) oberhalb und/oder in einer Fahrtrichtung (93) hinter einem Schneid-, Führungs- und/oder Förderelement (131 - 135) angeordnet ist, in eine Sicherheitsstellung (B) verstellt wird, in der sie dem Schneid-, Führungs- und/oder Förderelement (131 - 135) in Fahrtrichtung (93) vorgelagert ist,
• oder zurück.

12. Verfahren nach Anspruch 11, **dadurch gekennzeichnet, dass** das Vorsatzgerät (2) ein Geländer (22) umfasst, das reversibel von einer Nutzungsstellung (N) in eine Ruhestellung (R) verstellbar ist, und dass die Sicherheitseinrichtung (3) beim Verstellen des Geländers (22) von der Nutzungsstellung (N) in die Ruhestellung (R) automatisch von der Feldbetriebsstellung (F) in die Sicherheitsstellung (B), und/oder beim Zurückstellen automatisch zurück verstellt wird.

13. Verfahren nach einem der Ansprüche 11 - 12, **dadurch gekennzeichnet, dass** das Vorsatzgerät (2) wenigstens ein oder mehr klappbare Seitenteile (212, 213) umfasst, und dass die Sicherheitseinrichtung (3)
• vor einem Zusammenklappen des Seitenteils (212, 213) des Vorsatzgerätes (2) von der Erntebetriebsanordnung (E) in die Straßentransportanordnung (T) automatisch von der Feldbetriebsstellung (F) in die Sicherheitsstellung (B), und/oder
• nach einem Auseinanderklappen des Seitenteils (212, 213) des Vorsatzgerätes (2) von der Straßentransportanordnung (T) in die Erntebetriebsanordnung (E) automatisch von der Sicherheitsstellung (B) in die Feldbetriebsstellung (F),
verstellt wird.

14. Verfahren nach einem der Ansprüche 11 - 13, **dadurch gekennzeichnet, dass** das Verstellen der Sicherheitseinrichtung (3) von der Feldbetriebsstellung (F) in die Sicherheitsstellung (B) oder zurück durch Auslösen des Überführens des Vorsatzgerätes (2) von der Erntebetriebsanordnung (E) in die Straßentransportanordnung (T) oder zurück, und/oder durch Auslösen des Verstellens des Geländers (22) von der Nutzungsstellung (N) in die Ruhestellung (R) oder zurück, ausgelöst wird.

## Claims

1. Attachment unit (2) for harvesting stalk crops, comprising at least one cutting, guiding and/or conveying element (131 - 135) for cutting, guiding and/or conveying the crop, which element protrudes beyond a body (23) of the attachment unit (2) on an end face (S) arranged at the front in a travel direction (93), wherein a safety device (3) is arranged on the attachment unit (2), which safety device is intended to protect road users when the attachment unit (2) is transported by road and can be adjusted from a field operating position (F) into a safety position (B), in which it is positioned in front of the cutting, guiding and/or conveying element (131 - 135) in the travel direction (93), wherein the safety device (3) comprises a transverse arm (32) which has an extension component in a transverse direction (91) transverse to the travel direction (93) or extends in the transverse direction (91),
**characterized in that**
in the field operating position (F), the transverse arm (32) is arranged behind the body (23) in the travel direction (93) and/or is arranged above the body in an extension direction (92) which extends transversely to the travel direction (93) and transversely to the transverse direction (91).

2. Attachment unit (2) according to claim 1, **characterized in that** in the safety position (B), the safety device (3) is positioned in front of the cutting, guiding and/or conveying element (131 - 135) which protrudes furthest beyond the body (23).

3. Attachment unit (2) according to any of the preceding claims, **characterized in that** the safety device (3) can be reversibly moved and/or pivoted from the safety position (B) into a field operating position (F).

4. Attachment unit (2) according to any of the preceding claims, **characterized in that** the safety device (3) comprises a support arm (31) to which the transverse arm (32) is fastened, wherein the safety device (3) can be reversibly transferred from the safety position (B) into the field operating position (F) by moving, extending and/or pivoting the support arm (31).

5. Attachment unit (2) according to any of the preceding claims, **characterized in that** the attachment unit (2) comprises a railing (22) which can be transferred from a use position (N), in particular intended for harvesting operation, in which use position a guide bar (222) of the railing (22) is arranged above the body (23) and spaced apart therefrom, into a rest position (R), in particular intended for road transport, in which rest position the guide bar (222) is lowered in the extension direction (92) relative to the use position (N).

6. Attachment unit (2) according to any of the preceding claims, **characterized in that** the safety device (3) is mounted on the body (23) or on the railing (22).

7. Attachment unit (2) according to any of the preceding claims, **characterized in that** it is designed to automatically adjust the safety device (3) from the field operating position (F) into the safety position (B) when the railing (22) is adjusted from the use position (N) into the rest position (R), and/or automatically back when it is reset.

8. Attachment unit (2) according to any of the preceding claims, **characterized in that** it is designed to trigger the adjustment of the safety device (3) when the transfer of the attachment unit (2) from the harvesting operating arrangement (E) to the road transport arrangement (T) or back is triggered.

9. Attachment unit (2) according to any of claims 1 - 4, **characterized in that** the safety device (3) acts as a railing (22) in the harvesting operating arrangement (E) of the attachment unit (2).

10. Agricultural working machine (1) comprising an attachment unit (2) according to any of the preceding claims.

11. Method for transferring an attachment unit (2) for harvesting stalk crops according to any of claims 1 - 9
• from a harvesting operating arrangement (E) into a road transport arrangement (T),
• or back,
in which method a safety device (3) of the attachment unit (2), which is intended to protect road users during road transport of the attachment unit (2),
• is adjusted from a field operating position (F), in which it is arranged above a cutting, guiding and/or conveying element (131 - 135) in an extension direction (92) and/or is arranged behind a cutting, guiding and/or conveying element in a travel direction (93), into a safety position (B), in which it is positioned in front of the cutting, guiding and/or conveying element (131 - 135) in the travel direction (93),
• or back.

12. Method according to claim 11, **characterized in that** the attachment unit (2) comprises a railing (22) which is reversibly adjustable from a use position (N) into a rest position (R), **and in that** the safety device (3) is automatically adjusted from the field operating position (F) into the safety position (B) when the railing (22) is adjusted from the use position (N) into the rest position (R), and/or automatically adjusted back when it is reset.

13. Method according to any of claims 11 - 12, **characterized in that** the attachment unit (2) comprises at least one or more foldable side parts (212, 213), **and in that** the safety device (3)
• is automatically adjusted from the field operating position (F) into the safety position (B) before folding the side part (212, 213) of the attachment unit (2) from the harvesting operating arrangement (E) into the road transport arrangement (T), and/or
• is automatically adjusted from the safety position (B) into the field operating position (F) after unfolding the side part (212, 213) of the attachment unit (2) from the road transport arrangement (T) into the harvesting operating arrangement (E).

14. Method according to any of claims 11 - 13, **characterized in that** the adjustment of the safety device (3) from the field operating position (F) into the safety position (B) or back is triggered by triggering the transfer of the attachment unit (2) from the harvesting operating arrangement (E) into the road transport arrangement (T) or back, and/or by triggering the adjustment of the railing (22) from the use position (N) into the rest position (R) or back.

## Revendications

1. Appareil adaptable (2) pour récolter des produits en tiges comprenant au moins un élément de coupe, de guidage et/ou de transfert (131 - 135) pour couper, guider et/ou transférer le produit récolté et dépassant sur le côté avant (S) selon la direction de circulation (93), le corps (23) de l'appareil adaptable (2),
- l'appareil adaptable (2) ayant un dispositif de sécurité (3) pour protéger les participants à la circulation lors du transport routier de l'appareil adaptable (2) et qui peut être déplacé d'une position de travail dans les champs (F) dans une position de sécurité (B) dans laquelle il est en amont de l'élément de coupe de guidage et/ou de transfert (131-135) selon le sens de circulation (93),
- le dispositif de sécurité (3) comprenant un bras transversal (32) avec un composant d'extension dans une direction (91), transversale à la direction de circulation (93) ou qui s'étend dans la direction transversale (91), appareil **caractérisé en ce que**
le bras transversal (32) s'étend au-dessus du corps (23) en position de travail dans les champs (F) dans la direction de circulation (93) derrière et/ou dans une direction d'extension (92) transversale à la direction de circulation (93) et transversale à la direction transversale (91).

2. Appareil adaptable (2) selon la revendication 1,
**caractérisé en ce que**
le dispositif de sécurité (3) en position de sécurité (B) est installé devant l'élément de coupe, de guidage et/ou de transfert (131 - 135) en dépassant largement le corps (23).

3. Appareil adaptable (2) selon l'une des revendications précédentes,
**caractérisé en ce que**
le dispositif de sécurité (3) peut coulisser et/ou basculer de façon réversible de la position de sécurité (B) à une position de travail dans les champs (F).

4. Appareil adaptable (2) selon l'une des revendications précédentes,
**caractérisé en ce que**
le dispositif de sécurité (3) comprend un bras de support (31) auquel est fixé le bras transversal (32),
- par coulissement, allongement et/ou basculement du bras de support (31) le dispositif de sécurité (3) passe de manière réversible de la position de sécurité (B) dans la position de travail dans les champs (F).

5. Appareil adaptable (2) selon l'une des revendications précédentes,
**caractérisé en ce que**
l'appareil adaptable (2) comprend un garde-corps (22) qui peut être transféré d'une position d'utilisation (N) notamment pour le travail de récolte dans laquelle un arceau de guidage (222) de la rampe (22) est au-dessus du corps (23) et écarté de celui-ci à une position de repos (R) notamment pour le transport routier, dans laquelle l'arceau de guidage (222) est abaissé par rapport à la position zéro (N) dans la direction d'extension (92).

6. Appareil adaptable (2) selon l'une des revendications précédentes,
**caractérisé en ce que**
le dispositif de sécurité (3) est tenu au corps (23) ou à la rampe (22).

7. Appareil adaptable (2) selon l'une des revendications précédentes,
**caractérisé en ce que**
il est conçu pour déplacer le dispositif de sécurité (3) par le déplacement de la rampe (22) de la position utile (N) à la position de repos (R), automatiquement, de sa position de travail dans les champs (F) dans sa position de sécurité (B) et/ou lors du rappel, automatiquement en retour.

8. Appareil adaptable (2) selon l'une des revendications précédentes,
**caractérisé en ce que**
il est conçu pour déclencher le déplacement du dispositif de sécurité (3) lors du transfert de l'appareil adaptable (2) de sa disposition de récolte (E) dans sa disposition de transport routier (T) ou en retour.

9. Appareil adaptable (2) selon l'une des revendications 1 à 4,
**caractérisé en ce que**
en position de récolte (E) de l'appareil adaptable (2) le dispositif de sécurité (3) sert de rampe (22).

10. Machine agricole (1) comportant un appareil adaptable (2) selon l'une des revendications précédentes.

11. Procédé pour transférer un appareil adaptable (2) pour récolter des produits en tiges selon l'une des revendications 1 à 9,
- d'une disposition de récolte (E) dans une disposition de transport routier (T),
* ou inversement
selon lequel
le dispositif de sécurité (3) de l'appareil adaptable (2) servant à la protection des participants à la circulation lors du transport routier de l'appareil adaptable (2),
* est déplacé d'une position de travail dans les champs (F) dans laquelle elle est dans une direction d'extension (92) au-dessus et/ou dans une direction de circulation (93) derrière l'élément de coupe, de guidage et/ou de transfert (131 - 135) vers une position de sécurité (B) dans laquelle elle est en amont de l'élément de coupe, de guidage et/ou de transfert (131 - 135) selon la direction de circulation (93),
* ou en retour.

12. Procédé selon la revendication 11,
**caractérisé en ce que**
l'appareil adaptable (2) comprend une rampe (22) qui peut être déplacée de manière réversible d'une position d'utilisation (N) dans une position de repos (R), et
- l'installation de sécurité (3) lors du déplacement de la rampe (22) de la position utile (N) à la position de repos (R) passe automatiquement de la position de travail dans les champs (F) à la position de sécurité (B) et,
- au retour, en revenant automatiquement.

13. Procédé selon l'une de revendications 11 à 12,
**caractérisé en ce que**
l'appareil adaptable (2) comporte au moins une ou plusieurs parties latérales rabattables (212, 213),
et **en ce que** le dispositif de sécurité (3),
* avant de rabattre la partie latérale (212, 213) de l'appareil adaptable (2) de la position de récolte (E) à la disposition de transport routier (T), est déplacé automatiquement de la position de travail dans le champ (F) à la position de sécurité (B), et/ou
* après le déploiement de la partie latérale (212, 213), de l'appareil adaptable (2), de la position de transport routier (T) dans la position de récolte (E) passe automatiquement de la position de sécurité (B) à la position de travail dans les champs (F).

14. Procédé selon l'une des revendications 11 à 13,
**caractérisé en ce que**
le déplacement du dispositif de sécurité (3) de la position de travail dans les champs (F) à la position de sécurité (B) ou en retour, est déclenché par le déclenchement du transfert de l'appareil adaptable (2) de la disposition de récolte (E) dans la disposition de transport routier (T) ou en retour et/ou par le déclenchement du déplacement de la rampe (22) de la position utile (N) dans la position de repos (R) ou retour.
